# EUROPEAN PATENT SPECIFICATION

(11) **EP 4 614 208 B1**
(45) Date of publication and mention of the grant of the patent: **11.11.2026**
(21) Application number: 24162102.8
(22) Date of filing: 07.03.2024
(51) Int. Cl.: G02B 26/10

(54) **ELECTRIC CIRCUIT AND PROJECTOR**
ELEKTRISCHER SCHALTKREIS UND PROJEKTOR
CIRCUIT ÉLECTRIQUE ET PROJECTEUR

(43) Date of publication of application: 10.09.2025
(73) Proprietor: TriLite Technologies GmbH, 1040 Wien (AT)
(72) Inventor: SCHMID, Gerhard, 3844 Waldkirchen (AT); MAIER, Franz Josef, 9210 Pörtschach am Wörthersee (AT); DORFMEISTER, Manuel, 1020 Wien (AT); REITTERER, Joerg, 2345 Brunn am Gebirge (AT)
(74) Representative: Weiser Voith Gugler Patentanwälte Partnerschaft

(56) References cited:
- JP-A- H0 887 768
- US-A1- 2013 120 819

## Description

The present invention relates to an electric circuit for determining a reflection vector of a light beam incident on and reflected by an oscillating mirror. The invention further relates to a projector utilising the electric circuit for controlling a light source emitting said light beam. Document JP H08 87768 A (TOSHIBA CORP) 2 April 1996 (1996-04-02) is relevant to the present invention.

Projectors employing an oscillating mirror that reflects and thereby scans a light beam across a scanning area are used, e.g., in virtual reality (VR) or augmented reality (AR) glasses, helmets or head-up displays (HUDs) for a broad range of applications like navigation, training, entertainment, education or work. In these cases, the scanning area is the retina of an eye, an augmented reality (AR) combiner waveguide, another combiner optics, etc.; in other cases, the scanning area may be a board, projection screen, poster, or the like. Projectors of that kind have a light source which emits a single- or multicoloured light beam carrying an image comprised of pixels onto the oscillating mirror. The mirror, e.g., a micro-electromechanical-system (MEMS) mirror or a galvo mirror, oscillates about two axes to reflect the light beam into subsequent directions, one direction per pixel of the image, in order to two-dimensionally scan the light beam across the scanning area according to a scan pattern like a raster pattern, a Lissajous pattern, a spiral pattern, etc.

To project each pixel in the intended direction towards the scanning area at the corresponding mirror orientation, the pixel retrieval from a memory and the pixel dependent control of the light source have to be synchronised with the mirror oscillation. To this end, it is known to predetermine a sequence of pixels which corresponds to the order in which the pixels are to be projected according to the scan pattern. This is done either by measuring or by simulating the path of the reflected light beam from the mirror towards the scanning area in a central processing unit (CPU). The predetermined sequence of pixels is then stored in a memory, and the pixels are retrieved therefrom sequentially according to their sequence, often synchronised by a vertical and/or horizontal synchronisation signal (known as "HSYNC" and "VSYNC") from a mirror driver.

However, both simulating the light path of the reflected light beam in a CPU as well as measuring the sequence of pixels are elaborate, time-consuming and hence power consuming tasks. Moreover, storing the sequence of pixels in addition to the colour values of the pixels of the image requires a large and thus rather slowly accessible memory which constrains the achievable image resolution and/or frame rate. Furthermore, employing the predetermined fixed sequence of pixels does not allow to account for changes in the mirror oscillation and hence the scan pattern, e.g., caused by long-term drifts or short-term mirror or control loop fluctuations, etc. While long-term changes of the scan pattern may eventually be compensated for by an elaborate re-determination of the sequence of pixels, a compensation of short-term changes of the scan pattern is most often unfeasible.

It is an object of the present invention to provide an electric circuit and a projector that allow for a fast and accurate determination of an indication of the pixel that is to be projected and thus for a tight synchronisation of the mirror and the light source of said projector.

In a first aspect of the invention this object is achieved with an electric circuit for determining a reflection vector of a light beam incident on and reflected by an oscillating mirror, comprising
an input configured to obtain coordinates of a normalised mirror normal vector of the oscillating mirror and of an incidence vector of the incident light beam in a common three-dimensional coordinate system;
a projection sub-circuit connected to the input and configured to compute a dot product of said mirror normal vector and said incidence vector from the obtained coordinates and to compute each coordinate of a projection vector as a product of the respective coordinate of the mirror normal vector and said dot product times minus two; and
a summation sub-circuit connected to the input and to the projection sub-circuit and configured to add the computed projection vector to the incidence vector to determine the reflection vector of the light beam.

The invention is based on the provision of a dedicated electric circuit, i.e., dedicated hardware, for the task of determining the reflection vector of the light beam after its reflection by the oscillating mirror. The projection sub-circuit is dedicated to compute the projection vector which is the difference between the reflected vector and the incidence vector of the light beam, and the summation sub-circuit is dedicated to add the incidence and projection vectors, to obtain the reflection vector from the input mirror normal and incidence vectors.

Providing a dedicated hardware for the task of determining the reflection vector has several advantages. The computation of the projection vector and the addition of the projection and incidence vectors can be carried out by the dedicated projection and summation sub-circuits in a fast way, in particular when they are embodied as an application specific integrated circuit (ASIC), a field-programmable gate array (FPGA), or the like. This allows to determine on-the-fly, i.e., during operation of a projector, the reflection vector and, in turn, the corresponding pixel that is to be retrieved and projected by the light source of the projector. Hence, an intricate predetermination and storage of a large sequence of pixels is not required. Not requiring the storage of the pixel sequence, the projector's memory may either be smaller and faster accessible increasing the achievable frame rate, or may store more pixels increasing the achievable image resolution. The determination of the reflection vector on-the-fly based on the mirror normal vector of the current mirror orientation by design accounts for changes in the mirror oscillation and the scan pattern. Thus, drifts and fluctuations are compensated for by default, which is why the electric circuit facilitates an accurate determination of the reflection vector and of the corresponding pixel. Moreover, using a dedicated hardware for determining the reflection vector allows to carry out this task in an energy efficient way and within a compact electric circuit saving battery power and installation space in the projector.

The projection and summation sub-circuits may be embodied in many ways and may utilise many combinations of known analogue or digital electronic elements such as multipliers, adders, memory cells, delay elements, etc. to determine the dot product, the projection vector, and the reflection vector. Three advantageous embodiments, which may optionally be combined, shall be detailed in the following.

In the first advantageous embodiment, the projection sub-circuit, for computing the dot product, comprises
a first multiplier group having a first multiplier configured to multiply first coordinates of the mirror normal vector and the incidence vector to determine a first product, a second multiplier configured to multiply second coordinates of the mirror normal vector and the incidence vector to determine a second product, and a third multiplier configured to multiply third coordinates of the mirror normal vector and the incidence vector to determine a third product, and
an adder configured to add said first, second and third products to determine said dot product.

In this way, all the three products required for forming the dot product are computed particularly fast by the three multipliers of the first multiplier group, optionally even in parallel, and added together by the single downstream adder to efficiently form the dot product.
In the second advantageous embodiment, the projection sub-circuit, for computing the projection vector, comprises
a multiplicator configured to multiply said dot product by minus two to determine a scaled dot product, and
a second multiplier group having a first multiplier configured to multiply the first coordinate of the mirror normal vector by the scaled dot product to determine a first coordinate of the projection vector, a second multiplier configured to multiply the second coordinate of the mirror normal vector by the scaled dot product to determine a second coordinate of the projection vector, and a third multiplier configured to multiply the third coordinate of the mirror normal vector by the scaled dot product to determine a third coordinate of the projection vector.

Thereby, the projection vector is computed in a small number of steps and, thus, efficiently by a small number of electronic elements as it is the dot product - i.e., one single scalar instead of, e.g., the three coordinates of the mirror normal vector or the incidence vector - that is scaled by the factor minus two to form the scaled dot product. The scaled dot product, in turn, is multiplied by the mirror normal vector by the three multipliers of the second multiplier group, optionally even in parallel, to compute the projection vector in a particularly fast way.

In the third advantageous embodiment, the summation sub-circuit, for determining the reflection vector, comprises a first adder configured to add the first coordinate of the projection vector to the first coordinate of the incidence vector to determine a first coordinate of the reflection vector, a second adder configured to add the second coordinate of the projection vector to the second coordinate of the incidence vector to determine a second coordinate of the reflection vector, and a third adder configured to add the third coordinate of the projection vector to the third coordinate of the incidence vector to determine a third coordinate of the reflection vector.

Similar to the above-mentioned multiplications by the first and second multiplier groups, all three coordinates of the reflection vector can be determined by the three adders, e.g., in parallel and, thus, particularly fast.

In order to take into account an inclination of the scanning area with respect to the coordinate system, in a favourable embodiment, the input is further configured to obtain a sine and a cosine of each of a first and/or a second orientation angle indicating an orientation of the scanning area, and the electric circuit comprises a rotation sub-circuit connected to the input and to the summation sub-circuit and configured to rotate the determined reflection vector by said first and/or second orientation angle. In this embodiment, the coordinates of the reflection vector are determined by means of said rotation/s with respect to the scanning area, e.g. in a second coordinate system lying in the scanning area. Hence, the reflection vector rotated by the orientation angle/s is determined as seen from the inclined scanning area which eases a pixel retrieval in many applications.

In an optional variant of this embodiment, the input comprises an angle function sub-circuit and is configured to receive said first and/or said second orientation angle, wherein the angle function sub-circuit has one or more sine units configured to obtain said sine of the first and/or second orientation angle by computation and one or more cosine units configured to obtain said cosine of the first and/or second orientation angle by computation. Consequently, the angle functions are as well determined in dedicated sub-circuits in hardware and, thus, particularly fast and efficiently.

The rotation sub-circuit may be embodied in many ways. In a beneficial embodiment, for rotating the reflection vector by said first orientation angle, the rotation sub-circuit comprises
a first multiplier configured to multiply the sine of the first orientation angle by the third coordinate of the reflection vector to determine a first summand,
a second multiplier configured to multiply the cosine of the first orientation angle by the first coordinate of the reflection vector to determine a second summand,
a first adder configured to add the first and second summands to determine a first coordinate of the reflection vector rotated by the first orientation angle,
a third multiplier configured to multiply the cosine of the first orientation angle by the third coordinate of the reflection vector to determine a third summand,
a fourth multiplier configured to multiply the sine of the first orientation angle by the first coordinate of the reflection vector to determine a fourth summand, and
a second adder configured to add the third summand and a negative of the fourth summand to determine a third coordinate of the reflection vector rotated by said first orientation angle.

The provision of the four multipliers allows to compute the four summands particularly fast, optionally in parallel, and energy efficiently. The same accounts for the two adders which allow to add the respective summands in a fast and energy efficient way, e.g., in parallel. As a result, carrying out the rotation by the first orientation angle on-the-fly during operation of the projector is facilitated.

To further rotate the reflection vector by said second orientation angle in an energy efficient and fast way, it is favourable when the rotation sub-circuit further comprises
a fifth multiplier configured to multiply the sine of the second orientation angle by the third coordinate of the reflection vector rotated by said first orientation angle to determine a fifth summand,
a sixth multiplier configured to multiply the cosine of the second orientation angle by the second coordinate of the reflection vector rotated by said first orientation angle to determine a sixth summand,
a third adder configured to add the sixth summand and a negative of the fifth summand to determine a second coordinate of the reflection vector rotated by said second orientation angle,
a seventh multiplier configured to multiply the cosine of the second orientation angle by the third coordinate of the reflection vector rotated by said first orientation angle to determine a seventh summand,
an eighth multiplier configured to multiply the sine of the second orientation angle by the second coordinate of the reflection vector rotated by said first orientation angle to determine an eighth summand,
a fourth adder configured to add the seventh and eighth summands to determine a third coordinate of the reflection vector rotated by said second orientation angle.

In many applications, vertical and horizontal impingement angles under which the reflected light beam impinges onto the scanning area indicate the pixel that is to be retrieved and projected, e.g., when projecting onto a waveguide combiner or directly into the user's eye. To determine these impingement angles fast and efficiently, the electric circuit preferably comprises an angle determination sub-circuit configured to determine, from the determined reflection vector, the vertical and the horizontal impingement angle of the light beam on the scanning area, seen from the scanning area.

The electric circuit may determine the reflection vector or the impingement angles only once, e.g., to calibrate a projector. In a favourable embodiment, however, the electric circuit is configured to determine said reflection vector or said impingement angles repeatedly, preferably continuously, for successive orientations of the oscillating mirror. Consequently, the electric circuit allows to perform the determination of the pixel to be retrieved also in dependence on the reflection vector or on the impingement angles on-the-fly.

The input obtains the coordinates of the mirror normal vector from a physical measurement, either by directly receiving these coordinates from a sensor, or by transforming sensed data indicative of these coordinates received from a sensor into these coordinates. In an advantageous embodiment of the latter, the input comprises a transformation sub-circuit and is configured to receive a first oscillation angle of said mirror about a first axis and a second oscillation angle of said mirror about a second axis, wherein the transformation sub-circuit is configured to obtain the coordinates of the mirror normal vector by computation from the first and second oscillation angles. Compared to the mirror normal vector, the two oscillation angles can be sensed more easily, e.g., by a sensor connected to or included in the mirror driver. Hence, this embodiment facilitates the provision of the mirror normal vector by computing the same from the more easily accessible orientation angles.

It is particularly advantageous, when the transformation sub-circuit comprises
a first sine unit configured to compute a sine of the first oscillation angle to obtain the first coordinate of the mirror normal vector,
a first cosine unit configured to compute a cosine of the first oscillation angle,
a second sine unit configured to compute a sine of the second oscillation angle,
a second cosine unit configured to compute a cosine of the second oscillation angle,
a first multiplier connected to the first cosine unit and the second sine unit and configured to multiply the cosine of the first oscillation angle by the sine of the second oscillation angle and by minus one to obtain the second coordinate of the mirror normal vector, and
a second multiplier connected to the first cosine unit and the second cosine unit and configured to multiply the cosine of the first oscillation angle by the cosine of the second oscillation angle to obtain the third coordinate of the mirror normal vector.

The sine and cosine units of the transformation sub-circuit compute the required sine and cosine of each of the first and second oscillation angles in a fast way, optionally even in parallel. Likewise, the multipliers downstream of the sine and cosine units compute the second and third coordinates of the mirror normal vector fast, optionally even in parallel.

The mirror may reflect one light beam to project a black-and-white or greyscale image, or several light beams, e.g., a red, a green and a blue light beam, to project a colour image or several black-and-white or greyscale images next to each other. In one embodiment aiming at a reflection of several light beams, the electric circuit advantageously comprises one transformation sub-circuit and at least two groups of sub-circuits, each group having at least one projection sub-circuit and one summation sub-circuit, wherein each group is connected to the transformation sub-circuit and configured to determine the reflection vector of a respective light beam. In this embodiment, one and the same computation of the mirror normal vector by the transformation sub-circuit is efficiently utilised (quasi: recycled) for the downstream determination of the reflection vectors of at least two light beams by the groups of sub-circuits. Optionally, each group may further have a rotation sub-circuit to rotate the respective light beam, and further optionally, in addition or alternatively to the rotation sub-circuit, an angle determination sub-circuit to determine the impingement angles of the respective light beam.

In a preferred embodiment, the electric circuit further comprises a sensor connected to the input and configured to sense at least one of the coordinates of the incidence vector, the coordinates of the mirror normal vector, the first oscillation angle, the second oscillation angle, the first orientation angle and the second orientation angle, and to transmit the same to the input. Thus, the electric circuit itself can sense the required data for determining the reflection vector and/or the impingement angles.

In a further preferred embodiment, the electric circuit comprises a light source driver configured to drive a light source emitting said light beam or, where applicable, said several light beams in dependence on the determined reflection vector or impingement angles. Hence, the determined reflection vector or impingement angles are utilised by the electric circuit itself to retrieve the desired pixel indicating an intensity of the light beam/s and to control the light source in dependence on the retrieved pixels.

In a second aspect the present invention provides for a projector for projecting an image comprised of pixels onto a scanning area, comprising
a light source configured to emit a light beam carrying said image;
a mirror configured to oscillate about two axes in order to reflect the light beam across the scanning area in order to project the image onto the scanning area; and
an electric circuit as exemplified above, wherein the light source driver is connected to the light source to drive the same in order to project, for each determined reflection vector or pair of impingement angles, the desired pixel of the image.

The projector utilises the electric circuit in order to correctly project the image, i.e., each pixel thereof at the correct mirror orientation. To this end, the projector may make use of any of the above-mentioned embodiments of the electric circuit to achieve the above-mentioned advantages.

The invention will now be described by means of exemplary embodiments thereof with reference to the enclosed drawings, in which show:
Fig. 1 a projector comprising an electric circuit according to the invention, the projector projecting an image on a scanning area, in a schematic diagram.
Fig. 2 an oscillating mirror of the projector of Fig. 1, in a schematic top view;
Fig. 3 a light beam emitted by a light source of the projector of Fig. 1, incident on and reflected by the mirror of Fig. 2 under respective incidence and reflection vectors and impinging on the scanning area of Fig. 1, in a schematic side view;
Fig. 4 an embodiment of the electric circuit of Fig. 1 for determining the reflection vector of the light beam of Fig. 2, in a schematic circuit diagram;
Fig. 5 a further embodiment of the electric circuit of Fig. 1 for determining the reflection vector of the light beam of Fig. 2, in a schematic circuit diagram;
Fig. 6 the electric circuit of Fig. 4 or 5 further comprising a rotation sub-circuit for rotating the determined reflection vector by a first orientation angle, in a schematic circuit diagram;
Fig. 7 the electric circuit of Fig. 6 comprising an extended rotation sub-circuit for rotating the determined reflection vector also by a second orientation angle, in a schematic circuit diagram;
Fig. 8 the electric circuit of Fig. 6 further comprising a transformation sub-circuit for determining impinging angles under which the light beam impinges on the scanning area of Figs. 1 and 3, in a schematic circuit diagram;
Fig. 9 the electric circuit of Fig. 4 or 5 further comprising a transformation sub-circuit for computing coordinates of a mirror normal vector, in a schematic circuit diagram, and
Fig. 10 an embodiment of the electric circuit of Fig. 1 for determining impingement angles of several light beams, in a schematic block diagram.

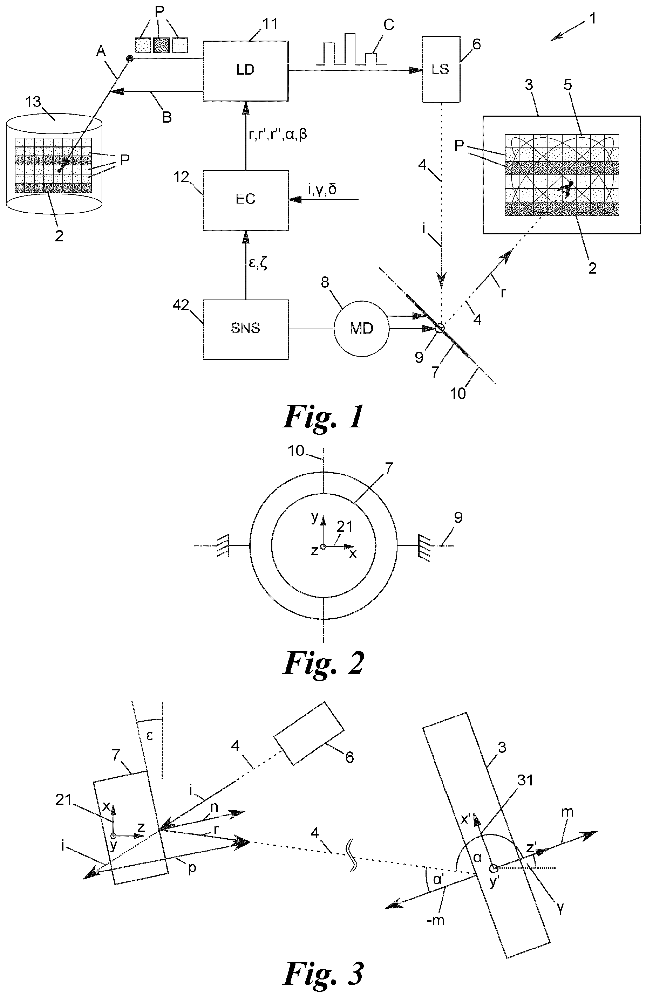

Fig. 1 shows a projector 1 projecting an image 2 onto a scanning area 3 by scanning the scanning area 3 with a pulsed or continuous light beam 4 according to a scan pattern 5 like a raster pattern, a Lissajous pattern, a spiral pattern or the like to draw, one after the other, pixels P of the image 2. The image 2 may or may not have a pixel resolution according to a conventional image or video standard, e.g., full HD (1920 x 1080 pixels), UHD (3840 x 2160 pixels), 4K (4096 x 2160 pixels) etc., and the scan pattern may or may not densely cover the scanning area 3; however, for illustrational purposes an image 2 with only few pixels P and a simple, coarse scan pattern 5 are shown in Fig. 1.

The image 2 is projected for at least one frame duration and may be part of a movie or be a single image, e.g. a photo, a rendering etc. to be projected for a longer period of time. The projector 1 may project the light beam 4 onto any kind of flat or curved scanning area 3, such as a board, a projection screen, a poster, the retina of an eye, an augmented reality (AR) combiner waveguide, another combiner optics, or the like. Accordingly, the projector 1 may be part of a projection system, AR or VR (virtual reality) glasses, a helmet, a head-up display, a smartphone, etc.

As shown in Figs. 1 to 3, the projector 1 has a light source 6 that emits the light beam 4 which carries the image 2 pixel-by-pixel in a time-multiplexed manner. The projector 1 further has an oscillating mirror 7 like a micro-electromechanical-system, MEMS, or galvo mirror, that reflects and thereby scans the emitted light beam 4 across the scanning area 3. To this end, the mirror 7 may, e.g., be gimbal-mounted as shown in Fig. 2 or kinematically-mounted (not shown). The mirror 7 is driven by a mirror driver 8 to oscillate about two different axes 9, 10, in order to reflect the emitted light beam 4 incident along an incidence vector i towards the scanning area 3 according to said scan pattern 5, at any point in time along a corresponding reflection vector r (Fig. 3). The reflection vector r and the incidence vector i differ by an imaginary projection vector p as illustrated in Fig. 3 by the vector triangle spanned by the shifted incidence vector i (dotted arrow), the projection vector p and the reflection vector r.

The light source 6 may be any light source known in the art, e.g., an incandescent lamp, a gas, liquid or solid laser, a laser diode, an LED, microLED (µLED), superluminescent light emitting diode (SLED), etc. The light source 6 is driven by a light source driver 11 according to the desired pixels P of the image 2. In case the light source 6 projects a mono-colour, black and white, or grey scale image 2 with a mono-coloured light beam 4, each pixel P comprises a single colour value, e.g., a brightness or intensity value, and in case the light source 6 projects a multi-colour image 2 with several light beams of different colours, each pixel comprises several colour values, e.g., RGB values indicating the brightness or intensity of a red, green, and blue colour, YPbPr values, etc.

As shown in Fig. 1, to synchronise the light beam emission by the light source 6 with the orientation of the mirror 7, the light source driver 11 receives, for each point in time, the corresponding reflection vector r (or a rotated reflection vector r', r", or a pair of impingement angles α, β as detailed below) from an electric circuit 12, which may optionally include or be part of the light source driver 11. Symbolised by the pointer A that points at the corresponding pixel P and is controlled by the light source driver 11 (cf. arrow B), the light source driver 11 retrieves the corresponding pixel P of the image 2, that is indicated by the received reflection vector r (or the rotated reflection vector r', r", or the pair of impingement angles α, β), from a memory 13 in which the desired pixel colour value/s are stored for each pixel P of the respective image 2. In turn, the light source driver 11 drives the light source 6 according to the retrieved pixel P, e.g. by a driving current C that corresponds to the pixel colour value/s. Consequently, for each reflection vector r (or rotated reflection vector r', r", or pair of impingement angles α, β) the desired pixel P of the image 2 is projected onto the scanning area 3.

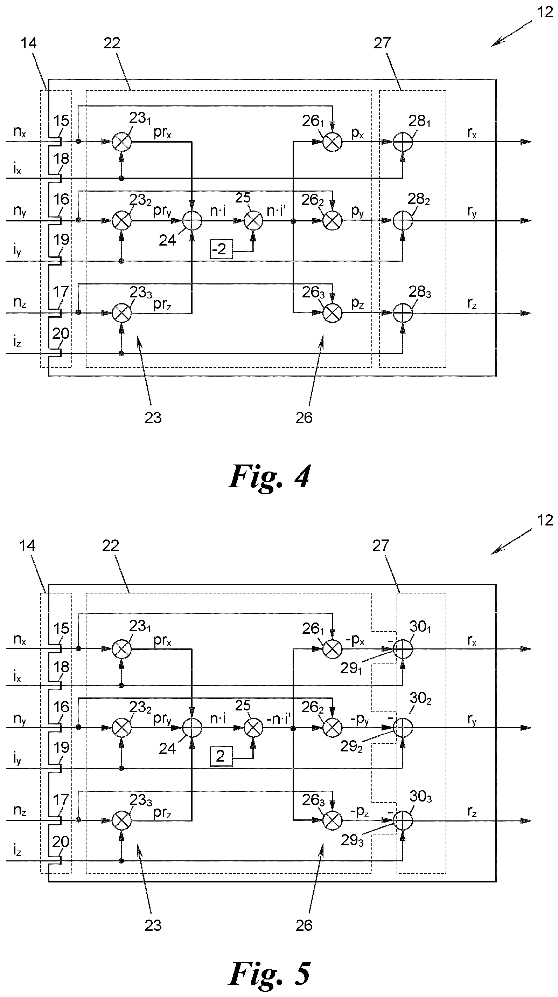

With reference to Fig. 4, the determination of the reflection vector r by the electric circuit 12 shall be described in detail.

As shown in the example of Fig. 4, the electric circuit 12 is a hardware circuit and has an input 14 with three ports 15, 16, 17, each for obtaining one coordinate nₓ, n_{y}, n_{z} of a normalised mirror normal vector n, and three further ports 18, 19, 20, each for obtaining one coordinate iₓ, i_{y}, i_{z} of the (optionally normalised) incidence vector i. Alternatively, the input 14 may have a different number of ports to receive the coordinates, e.g., one port receiving the coordinates one after the other. Moreover, the input 14 may optionally receive non-normalised coordinates of the mirror normal vector n and obtain the normalised coordinates nₓ, n_{y}, n_{z} by normalising the non-normalised coordinates.

The coordinates nₓ, n_{y}, n_{z}, iₓ, i_{y}, i_{z} of the mirror normal vector n and the incidence vector i are provided in a common three-dimensional coordinate system 21 (Fig. 3). In the example of Figs. 2 and 3, the common coordinate system 21 is located in the mirror 7 with one axis (here: the z-axis) being parallel to the mirror normal vector n in a reference orientation of the mirror 7 that may, e.g., coincide with a resting or central orientation of the mirror 7 (Fig. 2). Alternatively, the common coordinate system 21 may be positioned and oriented differently, e.g., co-moving with the mirror 7.

Returning to Fig. 4, the electric circuit 12 further has a projection sub-circuit 22 that is connected to the input 14. The projection sub-circuit 22 computes the dot product (sometimes called "inner product") n·i of the mirror normal and incidence vectors n, i.

To this end, in the example of Fig. 4, the projection sub-circuit 22 has a first multiplier group 23 and, downstream thereof, an adder 24. The first multiplier group 23 has a first multiplier 23ₗ which multiplies the first coordinate nₓ of the mirror normal vector n by the first coordinate iₓ of the incidence vector i to determine a first product prₓ, a second multiplier 23₂ which multiplies the second coordinate n_{y} of the mirror normal vector n by the second coordinate i_{y} of the incidence vector i to determine a second product pr_{y}, and a third multiplier 23₃ which multiplies the third coordinate n_{z} of the mirror normal vector n by the third coordinate i_{z} of the incidence vector i to determine a third product pr_{z}. The adder 24 adds the first, second and third products prₓ, pr_{y}, pr_{z} to determine the dot product n·i.

Therefrom, the projection sub-circuit 22 computes the projection vector p as a product of the normalised mirror normal vector n and the dot product n·i times minus two, i.e. as p = n · (n·i) · (-2). To this end, in the example of Fig. 4, the projection sub-circuit 22 has a multiplicator 25 and, downstream thereof, a second multiplier group 26. The multiplicator 25 multiplies the dot product n·i by minus two to determine a scaled dot product n·i' as -2·(n·i). The second multiplier group 26 has a first multiplier 26ₗ which multiplies the first coordinate nₓ of the mirror normal vector n by the scaled dot product n·i' to determine a first coordinate pₓ of the projection vector p, a second multiplier 26₂ which multiplies the second coordinate n_{y} of the mirror normal vector n by the scaled dot product n·i' to determine a second coordinate p_{y} of the projection vector p, and a third multiplier 26₃ which multiplies the third coordinate n_{z} of the mirror normal vector n by the scaled dot product n·i' to determine a third coordinate p_{z} of the projection vector p.

Downstream of the projection sub-circuit 22, the electric circuit 12 comprises a summation sub-circuit 27 that is connected to the ports 18 - 20 and to the projection sub-circuit 22 and adds the projection vector p to the incidence vector i to determine, as a result of the adding, the reflection vector r.

In the example of Fig. 4, the summation sub-circuit 27 comprises a first adder 28₁ which adds the first coordinate pₓ of the projection vector p to the first coordinate iₓ of the incidence vector i to determine a first coordinate rₓ of the reflection vector r, a second adder 28₂ which adds the second coordinate p_{y} of the projection vector p to the second coordinate i_{y} of the incidence vector i to determine a second coordinate r_{y} of the reflection vector r, and a third adder 28₃ which adds the third coordinate p_{z} of the projection vector p to the third coordinate i_{z} of the incidence vector i to determine a third coordinate r_{z} of the reflection vector r.

With respect to the multiplicator 25, it is noted, that the multiplication by minus two may be carried out in two steps by multiplying any of the following terms (a) the mirror normal vector n, (b) the incidence vector i, (c) the products prₓ, pr_{y}, pr_{z}, (d) the dot product n·i, or (e) the mirror normal vector n times the dot product n·i, by two, and the same or another one of these terms (a) - (e) by minus one, or in one step by multiplying any of the terms (a) - (e) by minus two.

Accordingly, Fig. 5 shows an alternative embodiment of the electric circuit 12 determining the reflection vector r. Here, the input 14 as well the first multiplication group 23, the adder 24 and the second multiplication group 26 of the projection sub-circuit 22 are embodied as in Fig. 4. However, the multiplicator 25 multiplies the dot product n·i (term (d) above) by two instead of minus two to obtain a negative -n·i' of the above-mentioned scaled dot product n·i' and the projection sub-circuit 22 applies a multiplication by minus one at a later stage by means of inverting inputs 29₁, 29₂, 29₃ of adders 30₁, 30₂, 30₃.

In one embodiment, the determined reflection vector r is directly transmitted to the light source driver 11 which utilises the same to drive the light source 6 in dependence thereon. The light source driver 11 may utilise the reflection vector r in many ways.

In a first example, the light source driver 11 may retrieve a pixel P that is more to the right in the image 2, when the x-coordinate rₓ of the reflection vector r is larger, and that is more to the top in the image 2, when the y-coordinate r_{y} of the reflection vector r is larger and vice versa. In a second example where the scanning area 3 is flat and normal to the z-axis of the coordinate system 21, the incidence vector i (or the reflection vector r) may be scaled such that the z-coordinate r_{z} of the reflection vector r corresponds to the distance between the mirror 7 and the scanning area 3. Then, the x- and y-coordinates of the rₓ, r_{y} of the reflection vector r may correspond to the x- and y-coordinates of the impingement point of the light beam 4 on the scanning area 3 such that the corresponding pixel P can be retrieved on the basis of the impingement point indicated by the x- and y-coordinates rₓ, r_{y} of the reflection vector r. For example, assuming a 1920 x 1080 pixel image 2, a column index of the pixel P to be retrieved may be computed as ((rₓ - r_{x,min}) / (r_{x,max} - r_{x,min})) · 1920, and a row index of the pixel P to be retrieved may be computed as ((r_{y} - r_{y,min}) / (_{ry,max} - r_{y,min})) · 1080, with r_{x,max} and r_{y,max} denoting the maximum value and r_{x,min} and r_{y,min} denoting the minimum value of the respective coordinate of the reflection vector r. Of course, other computations of the pixel P on the basis of the reflection vector r may be employed, for instance, a computation based on another linear or a non-linear assignment of any of the coordinates rₓ, r_{y}, r_{z} to the pixel indices or to the memory addresses of the pixels may be be utilised, e.g., in dependence on the arrangement of the pixels P in the memory 13, the physical arrangement of the light source 6, the mirror 7 and/or the scanning area 3.

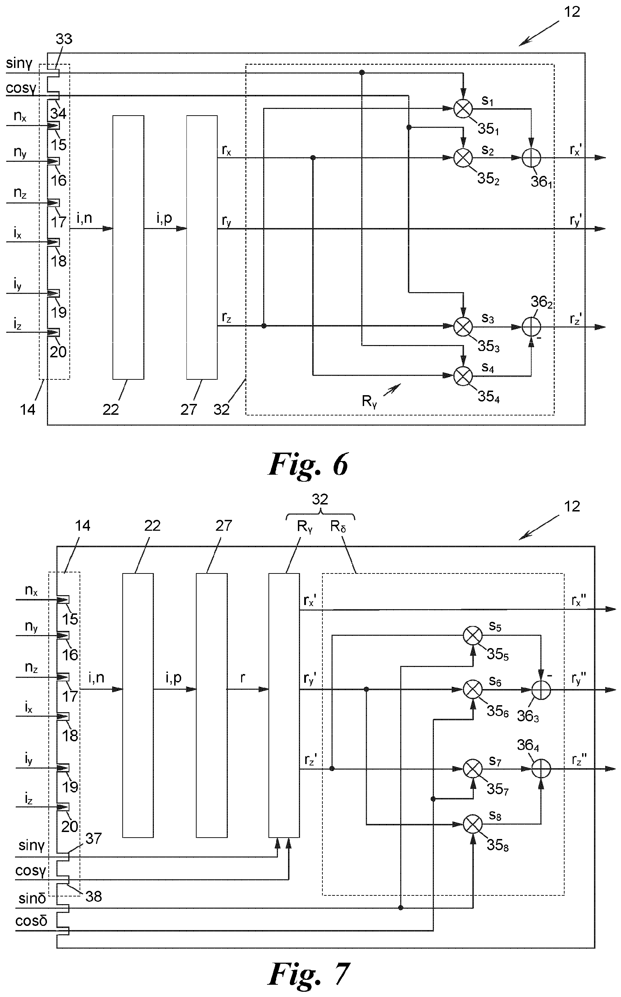

In further embodiments, e.g., the ones shown in Figs. 6 - 8, the determined reflection vector r is further processed by the electric circuit 12 to facilitate the driving of the light source 6 by the desired pixel P for the corresponding orientation of the mirror 7.

With reference to Figs. 3 and 6, a rotation of the determined reflection vector r by a first orientation angle γ of the scanning area 3 to consider a possible inclination of the scanning area 3 in relation to the coordinate system 21 shall now be described. As indicated in Fig. 3, the common coordinate system 21 and the scanning area 3 may be inclined with respect to one another by the first orientation angle γ (here: by a 20° rotation in relation to the common coordinate system 21 about the y-axis)].

To determine the impingement of the reflection vector r with respect to the scanning area 3, a determination of coordinates of the reflection vector r in a further coordinate system 31, e.g. one that has one axis (in Fig. 3: exemplarily its z'-axis) parallel to the scanning area's normal vector m (likewise: to its oppositely directed form -m), may be carried out by rotating the reflection vector r. To this end, the electric circuit 12 in the example of Fig. 6 further comprises a rotation sub-circuit 32. The rotation sub-circuit 32 is connected to the summation sub-circuit 27 and to two further ports 33, 34 of the input 14 which obtain a sine and a cosine of the first orientation angle γ. The rotation sub-circuit 32, in turn, rotates the reflection vector r from the summation sub-circuit 27 by the first orientation angle γ on the basis of the sine and cosine thereof.

For rotating the reflection vector r about said first orientation angle γ, the exemplary rotation sub-circuit 32 of Fig. 6 comprises a first multiplier 35₁ which multiplies the sine of the first orientation angle γ by the third coordinate r_{z} of the reflection vector r to determine a first summand s₁, a second multiplier 35₂ which multiplies the cosine of the first orientation angle γ by the first coordinate rₓ of the reflection vector r to determine a second summand s₂, and a first adder 36₁ which adds the first and second summands s₁, s₂ to determine a first coordinate rₓ' of the reflection vector r rotated by the first orientation angle γ (also called the "first" rotated reflection vector r' in the following).

The rotation sub-circuit 32 further comprises a third multiplier 35₃ which multiplies the cosine of the first orientation angle γ by the third coordinate r_{z} of the reflection vector r to determine a third summand s₃, a fourth multiplier 35₄ which multiplies the sine of the first orientation angle γ by the first coordinate rₓ of the reflection vector r to determine a fourth summand s₄, and a second adder 36₂ which adds the third summand s₃ and a negative of the fourth summand s₄, i.e., subtracts the fourth summand s₄ from the third summand s₃, to determine a third coordinate r_{z}' of the first rotated reflection vector r'. The second coordinate r_{y} of the reflection vector r is not affected by the exemplary inclination of Fig. 3 and thus equal to a second coordinate r_{y}' of the first rotated reflection vector r'.

As indicated in Fig. 1, the electric circuit 12 may transmit the first rotated reflection vector r' to the light source driver 11 for controlling the light source 6 in dependence thereon, e.g., as described above for the (unrotated) reflection vector r. The coordinates rₓ', r_{y}', r_{z}' of the first rotated reflection vector r' describe the reflection vector r in the further coordinate system 31 and, hence, from the view of the inclined scanning area 3, which eases the retrieval of the desired pixel P for the current mirror orientation and the control of the light source 6 on the basis thereof.

The common coordinate system 21 and the scanning area 3 may be inclined with respect to one another in a further direction, i.e., by a second orientation angle δ about a different second axis. To determine the impingement of the reflection vector r with respect to such an inclined scanning area 3, e.g., in a further coordinate system with an axis parallel to the scanning area normal vector m of such an inclined scanning area 3, the reflection vector r may be further rotated by the second orientation angle δ.

To this end, the electric circuit 12 may comprise the extended rotation sub-circuit 32 shown in the example of Fig. 7, which comprises the multipliers 35₁ - 35₄, and the adders 36₁, 36₂ of the example of Fig. 6 for a rotation by the first orientation angle γ (denoted by R_{y}), and four further multipliers 35₅ - 35₈ and two further adders 36₃, 36₄ for a rotation by the second orientation angle δ (denoted by R_{δ}). The rotation sub-circuit 32 is further connected to two further ports 37, 38 of the input 14 which obtains a sine and a cosine of the second orientation angle δ and rotates the reflection vector r a second time, now about said second axis by the second orientation angle δ on the basis of the sine and cosine of the second orientation angle δ.

To this end, the extended rotation sub-circuit 32 of Fig. 7 comprises a fifth multiplier 35₅ which multiplies the sine of the second orientation angle δ by the third coordinate r_{z}' of the first rotated reflection vector r' to determine a fifth summand s₅, a sixth multiplier 35₆ which multiplies the cosine of the second orientation angle δ by the second coordinate r_{y}' of the first rotated reflection vector r' to determine a sixth summand s₆, and a third adder 36₃ which adds a negative of the fifth summand s₅ and the sixth summand s₆, i.e., subtracts the fifth summand s₅ from the sixth summand s₆, to determine a second coordinate r_{y}" of the reflection vector r rotated by the second orientation angle δ (also called "second" rotated reflection vector r" in the following). The rotation sub-circuit 32 of Fig. 7 further comprises a seventh multiplier 35₇ which multiplies the cosine of the second orientation angle δ by the third coordinate r_{z}' of the first rotated reflection vector r' to determine a seventh summand s₇, an eighth multiplier 35₈ which multiplies the sine of the second orientation angle δ by the second coordinate r_{y}' of the first rotated reflection vector r' to determine an eighth summand s₈, and a fourth adder 36₄ which adds the seventh summand s₇ and the eighth summand s₈ to determine a third coordinate r_{z}" of the second rotated reflection vector r. In this example, the first coordinate rₓ' of the first rotated reflection vector r is not affected by the second rotation and thus equal to a first coordinate rₓ" of the second rotated reflection vector r".

As indicated in Fig. 1, the electric circuit 12 may transmit the second rotated reflection vector r" to the light source driver 11 for controlling the light source 6 in dependence thereon, e.g., as described above for the (unrotated) reflection vector r. The coordinates rₓ" , r_{y}" , r_{z}" of the second rotated reflection vector r" describe the reflection vector r in a further coordinate system that lies in the scanning area 3 and is rotated against the common coordinate system 21 by two rotations about two different axes by the respective orientation angles γ, δ, which eases the retrieval of the desired pixel P for the current mirror orientation and the control of the light source 6 on the basis thereof.

The rotation sub-circuit 32 may be embodied different from the examples of Figs. 6 and 7. For instance, the rotation components R_{γ} and R_{δ} - and thus the order of the first and second rotations - may be exchanged, i.e., the components R_{δ} may be arranged upstream the components R_{γ}. This corresponds to a different assignment of the "first", "second" and "third" coordinates to the x-, y- and z-coordinates of the common coordinate system 21, or - equivalently - to a rotation or inversion of the coordinate system 21. It is stressed that such a different assignment falls under the scope of the appended claims as well. In any case, the orientation angles γ, δ are defined as those angles that indicate the necessary rotations of the reflection vector r to describe the same in a coordinate system that has one axis normal to an inclined scanning area 3.

In some embodiments, e.g., when the scanning area 3 is a combiner of AR or VR glasses, in particular a waveguide combiner, the eye of a user, etc., the pixel P to be projected depends on the impingement angles α, β under which the light beam 4 impinges onto the scanning area 3. The impingement angles α, β may, e.g., be measured in a spherical coordinate system the zenith direction of which corresponds to the z'-axis of the further coordinate system 31. For instance, the vertical impingement angle α may be measured as the polar angle and the horizontal impingement angle β as the azimuth angle in this spherical coordinate system, or vice versa. In any case, the vertical and horizontal impingement angles α, β describe the impingement direction under which the light beam 4 impinges on the scanning area 3 as seen from the scanning area 3, either when looking in the direction of the light beam 4 (as shown in Fig. 3), or when looking in the opposite direction (as indicated by the impingement angle α' in Fig. 3).

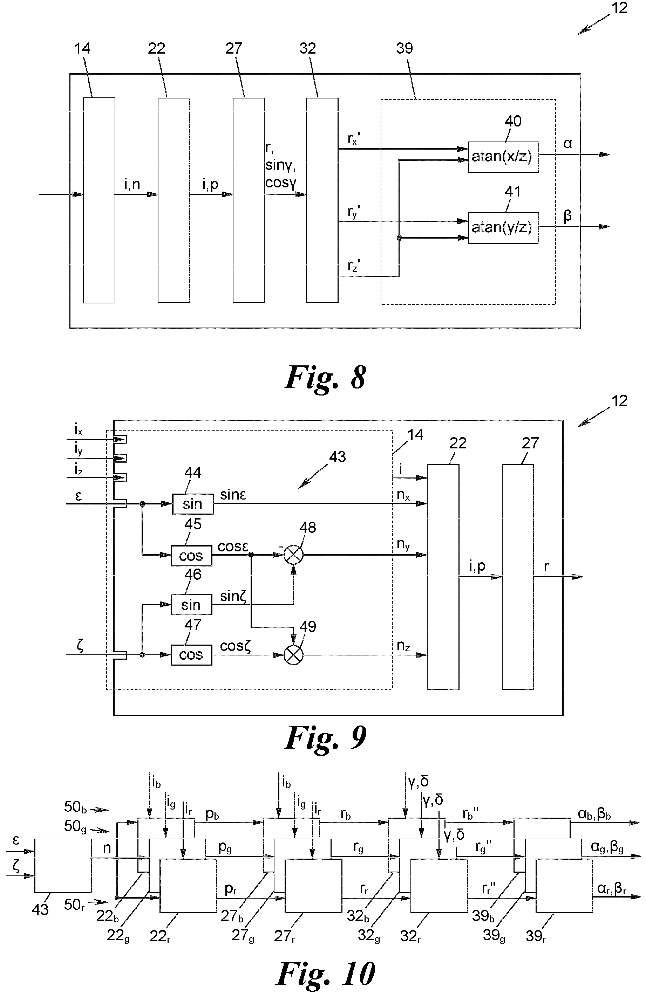

As shown in the example of Fig. 8, the electric circuit 12 may also comprise an angle determination sub-circuit 39 which determines the impingement angles α, β from the reflection vector r (here: from the first rotated reflection vector r', alternatively from the unrotated reflection vector r or from the second rotated reflection vector r"). In the example of Fig. 8, the angle determination sub-circuit 39 determines the vertical impingement angle α in an arctan unit 40 as the arctangent (atan), i.e. the inverse tangent, of the first coordinate rₓ' of the first rotated reflection vector r divided by the third coordinate r_{z}' of the first rotated reflection vector r. The angle determination sub-circuit 39 further determines the horizontal impingement angle β in a further arctan unit 41 as the arctangent (atan) of the second coordinate r_{y}' of the first rotated reflection vector r divided by the third coordinate r_{z}' of the first rotated reflection vector r.

In an alternative embodiment (not shown), the angle determination sub-circuit 39 determines the vertical impingement angle α as the arcsine, i.e. the inverse sine, of the first coordinate rₓ of the reflection vector r divided by the norm of the reflection vector r and the horizontal impingement angle β as the arctangent of the second coordinate r_{y} of the reflection vector r divided by the third coordinate r_{z} of the reflection vector r. In yet another embodiment (not shown), the angle determination sub-circuit 39 determines the vertical impingement angle α as the arcsine of the second coordinate r_{y} of the reflection vector r divided by the norm of the reflection vector r and the horizontal impingement angle β as the arctangent of the first coordinate rₓ of the reflection vector r divided by the third coordinate r_{z} of the reflection vector r. Accordingly, the impingement angles α, β may be determined in many further ways. It is noted that for non-flat scanning areas 3, the impingement angles α, β may optionally be determined for each impingement point separately, e.g., in a local coordinate system at these impingement points.

As indicated in Fig. 1, the electric circuit 12 may transmit the impingement angles α, β to the light source driver 11 for controlling the light source 6 in dependence thereon, e.g., similarly as described above for the (unrotated) reflection vector r. For instance, assuming a B x A pixel image 2, a column index of the pixel P to be retrieved may be computed as ((β - βₘᵢₙ) / (βₘₐₓ - βₘᵢₙ)) · B, and a row index of the pixel P to be retrieved may be computed as ((α - αₘᵢₙ) / (αₘₐₓ - αₘᵢₙ)) · A, with βₘₐₓ and αₘₐₓ denoting the maximum value βₘᵢₙ and αₘᵢₙ denoting the minimum value of the respective impingement angle α, β. Of course, other computations of the pixel P on the basis of the impingement angles α, β may be employed, for instance, a computation based on another linear or a non-linear assignment of the impingement angles α, β to the pixel indices or to the memory addresses of the pixels.

As mentioned above, the input 14 obtains the coordinates nₓ, n_{y}, n_{z} of the mirror normal vector n. To this end, the input 14 is connected to a sensor 42 as shown in Fig. 1. The sensor 42 may optionally be - at least partially - included in the electric circuit 12. In one embodiment, the sensor 42 may directly sense the mirror normal vector n and transmit the same to the input 14. In the embodiment of Fig. 1, the sensor 42 senses (here: from a driving signal of the mirror driver 8) a first oscillation angle ε (Fig. 3) of the mirror 7 about the first oscillation axis 9 and a second oscillation angle ζ of the mirror 7 about the second oscillation axis 10, and the input 14 obtains the mirror normal vector n from the oscillation angles ε, ζ by computation. Hence, the "obtaining" of the mirror normal vector n is in any case based on sensed data, which is either the mirror normal vector n itself or an indicator of the mirror normal vector n such as the oscillation angles ε, ζ.

Fig. 9 depicts an exemplary computation of the coordinates nₓ, n_{y}, n_{z} of the mirror normal vector n by means of the electric circuit 12 from the sensed oscillation angles ε, ζ that are received by the input 14. To this end, the input 14 has a transformation sub-circuit 43 which comprises a first sine unit 44 that computes a sine sinε of the first oscillation angle ε to obtain the first coordinate nₓ of the mirror normal vector n, a first cosine unit 45 that computes a cosine cosε of the first oscillation angle ε, a second sine unit 46 that computes the sine sinζ of the second oscillation angle ζ and a second cosine unit 47 that computes a cosine cosζ of the second oscillation angle ζ. The transformation sub-circuit 43 further comprises a first multiplier 48 that is connected to the first cosine unit 45 and to the second sine unit 46 and multiplies the cosine cosε of the first oscillation angle ε by the sine sinζ of the second oscillation angle ζ and by minus one to obtain the second coordinate n_{y} of the mirror normal vector n. The transformation sub-circuit 43 also comprises a second multiplier 49 that is connected to the first cosine unit 45 and the second cosine unit 47 and multiplies the cosine cosε of the first oscillation angle ε by the cosine cosζ of the second oscillation angle ζ to obtain the third coordinate n_{z} of the mirror normal vector n. The computed mirror normal vector n may then be used as described above with respect to Figs. 1 - 8.

Optionally, the sensor 42 or a further sensor may sense the incidence vector i and/or the orientation angles γ, δ (including sensing their sine and cosine). In most embodiments, these values are not affected by the mirror oscillation and, in this case, may be provided to the input 14 after a single sensing or a measuring by hand.

It is noted that the above-mentioned embodiments, in particular the ones shown in Figs. 1 - 9, may be combined in any sensible way. Fig. 10 schematically depicts an exemplary combination of the embodiments of Figs. 7 - 9 for determining the impingement angles α, β of several light beams 4, e.g. of the colours red, green and blue. In the example of Fig. 10, the electric circuit 12 comprises one transformation sub-circuit 43 which computes the current mirror normal vector n from the current oscillation angles ε, ζ. The electric circuit 12 further comprises, for each colour, a respective group 50 of sub-circuits, i.e., a red group 50ᵣ for the red colour (each sub-circuit and vector of the red group 50ᵣ being marked with the index "r"), a green group 50_{g} and a blue group 50_{b} (each sub-circuit and vector of the green and blue groups 50_{g}, 50_{b} being marked accordingly). Each group 50ᵣ, 50_{g}, 50_{b} has a respective projection sub-circuit 22ᵣ, 22_{g}, 22_{b} each of which determines the respective one of the projection vectors pr_{z} p_{g}, p_{b} from the common mirror normal vector n and the respective one of the incidence vectors iᵣ, i_{g}, i_{b}. Each group 50ᵣ, 50_{g}, 50_{b} further has a respective summation sub-circuit 27ᵣ, 27_{g}, 27_{b} each of which determines the respective one of the reflection vectors rᵣ, r_{g}, r_{b} from the respective projection and incidence vectors pr_{z} p_{g}, p_{g}, iᵣ, i_{g}, i_{b}. Downstream the summation sub-circuit 27ᵣ, 27_{g}, 27_{b} each group 50ᵣ, 50_{g}, 50_{b} has a respective rotation sub-circuit 32ᵣ, 32_{g}, 32_{b} each of which determines the respective one of the (here: second; alternatively: first) rotated reflection vectors rᵣ", r_{g}", r_{b}" from the respective reflection vector rᵣ, r_{g}, r_{b} and the common orientation angles γ, δ. Finally, each group 50ᵣ, 50_{g}, 50_{b} has a respective transformation sub-circuit 39ᵣ, 39_{g}, 39_{b} each of which determines the respective two of the six impingement angles αᵣ, βᵣ, α_{g}, β_{g}, α_{b}, β_{b} of the light beams 4ᵣ, 4_{g}, 4_{b}. Alternatively to the embodiment shown, each group 50ᵣ, 50_{g}, 50_{b} may not comprise the rotation and/or transformation sub-circuits 32ᵣ, 32_{g}, 32_{b}, 39ᵣ, 39_{g}, 39_{b}, e.g., when the scanning area 3 is not inclined or when no impingement angles are required, etc.

The above-mentioned determinations may be carried out once for a single mirror orientation or repeatedly. For instance, the electric circuit 12 may optionally determine the reflection vector r (r', r") and/or the impingement angles α, β continuously, for successive orientations of the mirror 7, such that the light source 6 may be controlled on-the-fly, at each mirror orientation, according to the desired pixel P.

The electric circuit 12 is a hardware circuit which may be analogue and/or digital and may be embodied as a field-programmable gate array (FPGA), as an application specific integrated circuit (ASIC), or the like.

The invention is not restricted to the specific embodiments disclosed herein, but encompasses all variants, modifications and combinations thereof that fall within the scope of the appended claims.

## Claims

1. An electric circuit for determining a reflection vector (r) of a light beam (4) incident on and reflected by an oscillating mirror (7), comprising
an input (14) configured to obtain coordinates (nₓ, n_{y}, n_{z}, iₓ, i_{y}, i_{z}) of a normalised mirror normal vector (n) of the oscillating mirror (7) and of an incidence vector (i) of the incident light beam (4) in a common three-dimensional coordinate system (21);
a projection sub-circuit (22) connected to the input (14) and configured to compute a dot product (n·i) of said mirror normal vector (n) and said incidence vector (i) from the obtained coordinates (nₓ, n_{y}, n_{z}, iₓ, i_{y}, i_{z}) and to compute each coordinate (pₓ, p_{y}, p_{z}) of a projection vector (p) as a product of the respective coordinate (nₓ, n_{y}, n_{z}) of the mirror normal vector (n) and said dot product (n·i) times minus two; and
a summation sub-circuit (27) connected to the input (14) and to the projection sub-circuit (22) and configured to add the computed projection vector (p) to the incidence vector (i) to determine the reflection vector (r) of the light beam (4).

2. The electric circuit according to claim 1, wherein the projection sub-circuit (22), for computing the dot product (n·i), comprises
a first multiplier group (23) having a first multiplier (23₁) configured to multiply first coordinates (nₓ, iₓ) of the mirror normal vector (n) and the incidence vector (i) to determine a first product (prₓ), a second multiplier (23₂) configured to multiply second coordinates (n_{y}, i_{y}) of the mirror normal vector (n) and the incidence vector (i) to determine a second product (pr_{y}), and a third multiplier (23₃) configured to multiply third coordinates (n_{z}, i_{z}) of the mirror normal vector (n) and the incidence vector (i) to determine a third product (pr_{z}), and
an adder (24) configured to add said first, second and third products (prₓ, pr_{y}, pr_{z}) to determine said dot product (n·i).

3. The electric circuit according to claim 1 or 2, wherein the projection sub-circuit (22), for computing the projection vector (p), comprises
a multiplicator (25) configured to multiply said dot product (n·i) by minus two to determine a scaled dot product (n·i'), and
a second multiplier group (26) having a first multiplier (26₁) configured to multiply the first coordinate (nₓ) of the mirror normal vector (n) by the scaled dot product (n·i') to determine a first coordinate (pₓ) of the projection vector (p), a second multiplier (26₂) configured to multiply the second coordinate (n_{y}) of the mirror normal vector (n) by the scaled dot product (n·i') to determine a second coordinate (p_{y}) of the projection vector (p), and a third multiplier (26₃) configured to multiply the third coordinate (n_{z}) of the mirror normal vector (n) by the scaled dot product (n-i') to determine a third coordinate (p_{z}) of the projection vector (p).

4. The electric circuit according to any one of claims 1 to 3, wherein the summation sub-circuit (27), for determining the reflection vector (r), comprises a first adder (28₁) configured to add the first coordinate (pₓ) of the projection vector (p) to the first coordinate (iₓ) of the incidence vector (i) to determine a first coordinate (rₓ) of the reflection vector (r), a second adder (28₂) configured to add the second coordinate (p_{y}) of the projection vector (p) to the second coordinate (i_{y}) of the incidence vector to determine a second coordinate (r_{y}) of the reflection vector (r), and a third adder (28₃) configured to add the third coordinate (p_{z}) of the projection vector (p) to the third coordinate (i_{z}) of the incidence vector (i) to determine a third coordinate (r_{z}) of the reflection vector (r).

5. The electric circuit according to any one of claims 1 to 4, wherein the input (14) is further configured to obtain a sine and a cosine of each of a first and/or a second orientation angle (γ, δ) indicating an orientation of a scanning area (3), and wherein the electric circuit (12) comprises a rotation sub-circuit (32) connected to the input (14) and to the summation sub-circuit (27) and configured to rotate the determined reflection vector (4) about said first and/or second orientation angle (γ, δ).

6. The electric circuit according to claim 5, wherein the rotation sub-circuit (32), for rotating the reflection vector about said first orientation angle (γ), comprises
a first multiplier (35₁) configured to multiply the sine of the first orientation angle (γ) by the third coordinate (r_{z}) of the reflection vector (r) to determine a first summand (s₁),
a second multiplier (35₂) configured to multiply the cosine of the first orientation angle (γ) by the first coordinate (rₓ) of the reflection vector (r) to determine a second summand (s₂),
a first adder (36₁) configured to add the first and second summands (s₁, s₂) to determine a first coordinate (rₓ') of the reflection vector (r) rotated about the first orientation angle (γ),
a third multiplier (35₃) configured to multiply the cosine of the first orientation angle (γ) by the third coordinate (r_{z}) of the reflection vector (r) to determine a third summand (s₃),
a fourth multiplier (35₄) configured to multiply the sine of the first orientation angle (γ) by the first coordinate (rₓ) of the reflection vector (r) to determine a fourth summand (s₄), and
a second adder (36₂) configured to add the third summand (s₃) and a negative of the fourth summand (s₄) to determine a third coordinate (r_{z}') of the reflection vector (r) rotated about said first orientation angle (γ).

7. The electric circuit according to claim 6, wherein the rotation sub-circuit (32), for rotating the reflection vector (r) further about said second orientation angle (δ), comprises
a fifth multiplier (35₅) configured to multiply the sine of the second orientation angle (δ) by the third coordinate (r_{z}') of the reflection vector (r) rotated about said first orientation angle (γ) to determine a fifth summand (s₅),
a sixth multiplier (35₆) configured to multiply the cosine of the second orientation angle (δ) by the second coordinate (r_{y}') of the reflection vector (r) rotated about said first orientation angle (γ) to determine a sixth summand (s₆),
a third adder (36₃) configured to add the sixth summand (s₆) and a negative of the fifth summand (s₅) to determine a second coordinate (r_{y}") of the reflection vector (r) rotated about said second orientation angle (δ),
a seventh multiplier (35₇) configured to multiply the cosine of the second orientation angle (δ) by the third coordinate (r_{z}') of the reflection vector (r) rotated about said first orientation angle (γ) to determine a seventh summand (s₇),
an eighth multiplier (35₈) configured to multiply the sine of the second orientation angle (δ) by the second coordinate (r_{y}') of the reflection vector (r) rotated about said first orientation angle (γ) to determine an eighth summand (s₈),
a fourth adder (36₄) configured to add the seventh and eighth summands (s₇, s₈) to determine a third coordinate (r_{z}") of the reflection vector (r) rotated about said second orientation angle (δ).

8. The electric circuit according to any one of claims 1 to 7, further comprising an angle determination sub-circuit (39) configured to determine, from the determined reflection vector (r), a vertical and a horizontal impingement angle (α, β) of the light beam (4) on the scanning area (3), seen from the scanning area (3).

9. The electric circuit according to any one of claims 1 to 8, configured to determine said reflection vector (r) or said impingement angles (α, β) repeatedly, preferably continuously, for successive orientations of the oscillating mirror (7).

10. The electric circuit according to any one of claims 1 to 9, wherein the input (14) comprises a transformation sub-circuit (43) and is configured to receive a first oscillation angle (ε) of said mirror (7) about a first axis (9) and a second oscillation angle (ζ) of said mirror (7) about a second axis (10), wherein the transformation sub-circuit (43) is configured to obtain the coordinates (nₓ, n_{y}, n_{z}) of the mirror normal vector (n) by computation from the first and second oscillation angles (ε, ζ) .

11. The electric circuit according to claim 10, wherein the transformation sub-circuit (43) comprises
a first sine unit (44) configured to compute a sine of the first oscillation angle (ε) to obtain the first coordinate (nₓ) of the mirror normal vector (n),
a first cosine unit (45) configured to compute a cosine (cosε) of the first oscillation angle (ε),
a second sine unit (46) configured to compute a sine (sinζ) of the second oscillation angle (ζ),
a second cosine unit (47) configured to compute a cosine (cosζ) of the second oscillation angle (ζ),
a first multiplier (48) connected to the first cosine unit (45) and the second sine unit (47) and configured to multiply the cosine (cosε) of the first oscillation angle (ε) by the sine (sinζ) of the second oscillation angle (ζ) and by minus one to obtain the second coordinate (n_{y}) of the mirror normal vector (n), and
a second multiplier (49) connected to the first cosine unit (45) and the second cosine unit (47) and configured to multiply the cosine (cosε) of the first oscillation angle (ε) by the cosine (cosζ) of the second oscillation angle (ζ) to obtain the third coordinate (n_{z}) of the mirror normal vector (n).

12. The electric circuit according to claim 10 or 11, comprising one transformation sub-circuit (43) and at least two groups (50ᵣ, 50_{g}, 50_{b}) of sub-circuits, each group (50ᵣ, 50_{g}, 50_{b}) having at least one projection sub-circuit (22ᵣ, 22_{g}, 22_{b}) and one summation sub-circuit (27ᵣ, 27_{g}, 27₃),
wherein each group (50ᵣ, 50_{g}, 50_{b}) is connected to the transformation sub-circuit (43) and configured to determine the reflection vector (r) of a respective light beam (4).

13. The electric circuit according to any one of claims 1 to 12, further comprising a sensor (42) connected to the input (14) and configured to sense at least one of the coordinates (iₓ, i_{y}, i_{z}) of the incidence vector (i), the coordinates (nₓ, n_{y}, n_{z}) of the mirror normal vector (n), the first oscillation angle (ε), the second oscillation angle (ζ), the first orientation angle (γ) and the second orientation angle (δ), and to transmit the same to the input (14).

14. The electric circuit according to any one of claims 1 to 13, further comprising a light source driver (11) configured to drive a light source (6) emitting said light beam/s (4) in dependence on the determined reflection vector (r) or impingement angles (α, β).

15. A projector for projecting an image (2) comprised of pixels (P) onto a scanning area (3), comprising
a light source (6) configured to emit a light beam (4) carrying said image (2);
a mirror (7) configured to oscillate about two axes (9, 10) in order to reflect the light beam (4) across the scanning area (3) in order to project the image (2) onto the scanning area (3); and
an electric circuit (12) according to claim 14, wherein the light source driver (11) is connected to the light source (6) to drive the same in order to project, for each determined reflection vector (r) or pair of impingement angles (α, β), the desired pixel (P) of the image (2).

## Patentansprüche

1. Elektrische Schaltung zum Bestimmen eines Reflexionsvektors (r) eines Lichtstrahls (4), der auf einen oszillierenden Spiegel (7) einfällt und von diesem reflektiert wird, umfassend
einen Eingang (14), der dazu ausgebildet ist, Koordinaten (nₓ, n_{y}, n_{z}, iₓ, i_{y}, i_{z}) eines normierten Spiegelnormalenvektors (n) des oszillierenden Spiegels (7) und eines Einfallsvektors (i) des einfallenden Lichtstrahls (4) in einem gemeinsamen dreidimensionalen Koordinatensystem (21) zu erhalten;
eine Projektions-Teilschaltung (22), die mit dem Eingang (14) verbunden und dazu ausgebildet ist, ein Skalarprodukt (n·i) des genannten Spiegelnormalenvektors (n) und des genannten Einfallsvektors (i) aus den erhaltenen Koordinaten (nₓ, n_{y}, n_{z}, iₓ, i_{y}, i_{z}) zu berechnen und jede Koordinate (pₓ, p_{y}, p_{z}) eines Projektionsvektors (p) als ein Produkt der jeweiligen Koordinate (nₓ, n_{y}, n_{z}) des Spiegelnormalenvektors (n) und des genannten Skalarprodukts (n·i) mal minus zwei zu berechnen; und
eine Summations-Teilschaltung (27), die mit dem Eingang (14) und der Projektions-Teilschaltung (22) verbunden und dazu ausgebildet ist, den berechneten Projektionsvektor (p) zu dem Einfallsvektor (i) zu addieren, um den Reflexionsvektor (r) des Lichtstrahls (4) zu bestimmen.

2. Elektrische Schaltung nach Anspruch 1, wobei die Projektions-Teilschaltung (22) zum Berechnen des Skalarprodukts (n·i) umfasst:
eine erste Multiplizierergruppe (23) mit einem ersten Multiplizierer (23₁), der dazu ausgebildet ist, erste Koordinaten (nₓ, iₓ) des Spiegelnormalenvektors (n) und des Einfallsvektors (i) zu multiplizieren, um ein erstes Produkt (prₓ) zu bestimmen, einem zweiten Multiplizierer (23₂), der dazu ausgebildet ist, zweite Koordinaten (n_{y}, i_{y}) des Spiegelnormalenvektors (n) und des Einfallsvektors (i) zu multiplizieren, um ein zweites Produkt (pr_{y}) zu bestimmen, und einem dritten Multiplizierer (23₃), der dazu ausgebildet ist, dritte Koordinaten (n_{z}, i_{z}) des Spiegelnormalenvektors (n) und des Einfallsvektors (i) zu multiplizieren, um ein drittes Produkt (pr_{z}) zu bestimmen, und
einen Addierer (24), der dazu ausgebildet ist, die genannten ersten, zweiten und dritten Produkte (prₓ, pr_{y}, pr_{z}) zu addieren, um das genannte Skalarprodukt (n·i) zu bestimmen.

3. Elektrische Schaltung nach Anspruch 1 oder 2, wobei die Projektions-Teilschaltung (22) zum Berechnen des Projektionsvektors (p) umfasst:
einen Multiplikator (25), der dazu ausgebildet ist, das genannte Skalarprodukt (n·i) mit minus zwei zu multiplizieren, um ein skaliertes Skalarprodukt (n·i') zu bestimmen, und
eine zweite Multiplizierergruppe (26) mit einem ersten Multiplizierer (26₁), der dazu ausgebildet ist, die erste Koordinate (nₓ) des Spiegelnormalenvektors (n) mit dem skalierten Skalarprodukt (n·i') zu multiplizieren, um eine erste Koordinate (pₓ) des Projektionsvektors (p) zu bestimmen, einem zweiten Multiplizierer (26₂), der dazu ausgebildet ist, die zweite Koordinate (n_{y}) des Spiegelnormalenvektors (n) mit dem skalierten Skalarprodukt (n·i') zu multiplizieren, um eine zweite Koordinate (p_{y}) des Projektionsvektors (p) zu bestimmen, und einem dritten Multiplizierer (26₃), der dazu ausgebildet ist, die dritte Koordinate (n_{z}) des Spiegelnormalenvektors (n) mit dem skalierten Skalarprodukt (n·i') zu multiplizieren, um eine dritte Koordinate (p_{z}) des Projektionsvektors (p) zu bestimmen.

4. Elektrische Schaltung nach einem der Ansprüche 1 bis 3, wobei die Summations-Teilschaltung (27) zum Bestimmen des Reflexionsvektors (r) umfasst: einen ersten Addierer (28₁), der dazu ausgebildet ist, die erste Koordinate (pₓ) des Projektionsvektors (p) zu der ersten Koordinate (iₓ) des Einfallsvektors (i) zu addieren, um eine erste Koordinate (rₓ) des Reflexionsvektors (r) zu bestimmen, einen zweiten Addierer (28₂), der dazu ausgebildet ist, die zweite Koordinate (p_{y}) des Projektionsvektors (p) zu der zweiten Koordinate (i_{y}) des Einfallsvektors zu addieren, um eine zweite Koordinate (r_{y}) des Reflexionsvektors (r) zu bestimmen, und einen dritten Addierer (28₃), der dazu ausgebildet ist, die dritte Koordinate (p_{z}) des Projektionsvektors (p) zu der dritten Koordinate (i_{z}) des Einfallsvektors (i) zu addieren, um eine dritte Koordinate (r_{z}) des Reflexionsvektors (r) zu bestimmen.

5. Elektrische Schaltung nach einem der Ansprüche 1 bis 4, wobei der Eingang (14) ferner dazu ausgebildet ist, einen Sinus und einen Cosinus jeweils eines eine Orientierung eines Scanbereichs (3) angebenden ersten und/oder zweiten Orientierungswinkels (γ, δ) zu erhalten und wobei die elektrische Schaltung (12) eine Rotations-Teilschaltung (32) umfasst, die mit dem Eingang (14) und der Summations-Teilschaltung (27) verbunden und dazu ausgebildet ist, den bestimmten Reflexionsvektor (4) um den genannten ersten und/oder zweiten Orientierungswinkel (γ, δ) zu rotieren.

6. Elektrische Schaltung nach Anspruch 5, wobei die Rotations-Teilschaltung (32) zum Rotieren des Reflexionsvektors um den genannten ersten Orientierungswinkel (γ) umfasst:
einen ersten Multiplizierer (35₁), der dazu ausgebildet ist, den Sinus des ersten Orientierungswinkels (γ) mit der dritten Koordinate (r_{z}) des Reflexionsvektors (r) zu multiplizieren, um einen ersten Summanden (s₁) zu bestimmen,
einen zweiten Multiplizierer (35₂), der dazu ausgebildet ist, den Cosinus des ersten Orientierungswinkels (γ) mit der ersten Koordinate (rₓ) des Reflexionsvektors (r) zu multiplizieren, um einen zweiten Summanden (s₂) zu bestimmen,
einen ersten Addierer (36₁), der dazu ausgebildet ist, die ersten und zweiten Summanden (s₁, s₂) zu addieren, um eine erste Koordinate (rₓ') des um den ersten Orientierungswinkel (γ) rotierten Reflexionsvektors (r) zu bestimmen,
einen dritten Multiplizierer (35₃), der dazu ausgebildet ist, den Cosinus des ersten Orientierungswinkels (γ) mit der dritten Koordinate (r_{z}) des Reflexionsvektors (r) zu multiplizieren, um einen dritten Summanden (s₃) zu bestimmen,
einen vierten Multiplizierer (35₄), der dazu ausgebildet ist, den Sinus des ersten Orientierungswinkels (γ) mit der ersten Koordinate (rₓ) des Reflexionsvektors (r) zu multiplizieren, um einen vierten Summanden (s₄) zu bestimmen, und
einen zweiten Addierer (36₂), der dazu ausgebildet ist, den dritten Summanden (s₃) und ein Negatives des vierten Summanden (s₄) zu addieren, um eine dritte Koordinate (r_{z}') des um den genannten ersten Orientierungswinkel (γ) rotierten Reflexionsvektors (r) zu bestimmen.

7. Elektrische Schaltung nach Anspruch 6, wobei die Rotations-Teilschaltung (32) zum weiteren Rotieren des Reflexionsvektors (r) um den genannten zweiten Orientierungswinkel (δ) umfasst:
einen fünften Multiplizierer (35₅), der dazu ausgebildet ist, den Sinus des zweiten Orientierungswinkels (δ) mit der dritten Koordinate (r_{z}') des um den genannten ersten Orientierungswinkel (γ) rotierten Reflexionsvektors (r) zu multiplizieren, um einen fünften Summanden (s₅) zu bestimmen,
einen sechsten Multiplizierer (35₆), der dazu ausgebildet ist, den Cosinus des zweiten Orientierungswinkels (δ) mit der zweiten Koordinate (r_{y}') des um den genannten ersten Orientierungswinkel (γ) rotierten Reflexionsvektors (r) zu multiplizieren, um einen sechsten Summanden (s₆) zu bestimmen,
einen dritten Addierer (36₃), der dazu ausgebildet ist, den sechsten Summanden (s₆) und ein Negatives des fünften Summanden (s₅) zu addieren, um eine zweite Koordinate (r_{y}") des um den genannten zweiten Orientierungswinkel (δ) rotierten Reflexionsvektors (r) zu bestimmen,
einen siebten Multiplizierer (35₇), der dazu ausgebildet ist, den Cosinus des zweiten Orientierungswinkels (δ) mit der dritten Koordinate (r_{z}') des um den genannten ersten Orientierungswinkel (γ) rotierten Reflexionsvektors (r) zu multiplizieren, um einen siebten Summanden (s₇) zu bestimmen,
einen achten Multiplizierer (35₈), der dazu ausgebildet ist, den Sinus des zweiten Orientierungswinkels (δ) mit der zweiten Koordinate (r_{y}') des um den genannten ersten Orientierungswinkel (γ) rotierten Reflexionsvektors (r) zu multiplizieren, um einen achten Summanden (s₈) zu bestimmen,
einen vierten Addierer (36₄), der dazu ausgebildet ist, die siebten und achten Summanden (s₇, s₈) zu addieren, um eine dritte Koordinate (r_{z}") des um den genannten zweiten Orientierungswinkel (δ) rotierten Reflexionsvektors (r) zu bestimmen.

8. Elektrische Schaltung nach einem der Ansprüche 1 bis 7, ferner umfassend eine Winkelbestimmungs-Teilschaltung (39), die dazu ausgebildet ist, aus dem bestimmten Reflexionsvektor (r) einen vertikalen und einen horizontalen Auftreffwinkel (α, β) des Lichtstrahls (4) auf dem Scanbereich (3), von dem Scanbereich (3) aus gesehen, zu bestimmen.

9. Elektrische Schaltung nach einem der Ansprüche 1 bis 8, die dazu ausgebildet ist, den genannten Reflexionsvektor (r) oder die genannten Auftreffwinkel (α, β) wiederholt, bevorzugt kontinuierlich, für aufeinanderfolgende Orientierungen des oszillierenden Spiegels (7) zu bestimmen.

10. Elektrische Schaltung nach einem der Ansprüche 1 bis 9, wobei der Eingang (14) eine Transformations-Teilschaltung (43) umfasst und dazu ausgebildet ist, einen ersten Oszillationswinkel (ε) des genannten Spiegels (7) um eine erste Achse (9) und einen zweiten Oszillationswinkel (ζ) des genannten Spiegels (7) um eine zweite Achse (10) zu empfangen, wobei die Transformations-Teilschaltung (43) dazu ausgebildet ist, die Koordinaten (nₓ, n_{y}, n_{z}) des Spiegelnormalenvektors (n) durch Berechnung aus den ersten und zweiten Oszillationswinkeln (ε, ζ) zu erhalten.

11. Elektrische Schaltung nach Anspruch 10, wobei die Transformations-Teilschaltung (43) umfasst:
eine erste Sinuseinheit (44), die dazu ausgebildet ist, einen Sinus des ersten Oszillationswinkels (ε) zu berechnen, um die erste Koordinate (nₓ) des Spiegelnormalenvektors (n) zu erhalten,
eine erste Cosinuseinheit (45), die dazu ausgebildet ist, einen Cosinus (cosε) des ersten Oszillationswinkels (ε) zu berechnen,
eine zweite Sinuseinheit (46), die dazu ausgebildet ist, einen Sinus (sinζ) des zweiten Oszillationswinkels (ζ) zu berechnen,
eine zweite Cosinuseinheit (47), die dazu ausgebildet ist, einen Cosinus (cosζ) des zweiten Oszillationswinkels (ζ) zu berechnen,
einen ersten Multiplizierer (48), der mit der ersten Cosinuseinheit (45) und der zweiten Sinuseinheit (47) verbunden und dazu ausgebildet ist, den Cosinus (cosε) des ersten Oszillationswinkels (ε) mit dem Sinus (sinζ) des zweiten Oszillationswinkels (ζ) und mit minus eins zu multiplizieren, um die zweite Koordinate (n_{y}) des Spiegelnormalenvektors (n) zu erhalten, und
einen zweiten Multiplizierer (49), der mit der ersten Cosinuseinheit (45) und der zweiten Cosinuseinheit (47) verbunden und dazu ausgebildet ist, den Cosinus (cosε) des ersten Oszillationswinkels (ε) mit dem Cosinus (cosζ) des zweiten Oszillationswinkels (ζ) zu multiplizieren, um die dritte Koordinate (n_{z}) des Spiegelnormalenvektors (n) zu erhalten.

12. Elektrische Schaltung nach Anspruch 10 oder 11, umfassend eine Transformations-Teilschaltung (43) und zumindest zwei Gruppen (50ᵣ, 50_{g}, 50_{b}) von Teilschaltungen, wobei jede Gruppe (50ᵣ, 50_{g}, 50_{b}) zumindest eine Projektions-Teilschaltung (22ᵣ, 22_{g}, 22_{b}) und eine Summations-Teilschaltung (27ᵣ, 27_{g}, 27_{b}) aufweist,
wobei jede Gruppe (50ᵣ, 50_{g}, 50_{b}) mit der Transformations-Teilschaltung (43) verbunden und dazu ausgebildet ist, den Reflexionsvektor (r) eines jeweiligen Lichtstrahls (4) zu bestimmen.

13. Elektrische Schaltung nach einem der Ansprüche 1 bis 12, ferner umfassend einen Sensor (42), der mit dem Eingang (14) verbunden und dazu ausgebildet ist, zumindest eines aus den Koordinaten (iₓ, i_{y}, i_{z}) des Einfallsvektors (i), den Koordinaten (nₓ, n_{y}, n_{z}) des Spiegelnormalenvektors (n), dem ersten Oszillationswinkel (ε), dem zweiten Oszillationswinkel (ζ), dem ersten Orientierungswinkel (γ) und dem zweiten Orientierungswinkel (δ) zu erfassen, und diese/n an den Eingang (14) zu übertragen.

14. Elektrische Schaltung nach einem der Ansprüche 1 bis 13, ferner umfassend einen Lichtquellentreiber (11), der dazu ausgebildet ist, eine Lichtquelle (6) anzusteuern, die den Lichtstrahl/die Lichtstrahlen (4) in Abhängigkeit von dem bestimmten Reflexionsvektor (r) oder den bestimmten Auftreffwinkeln (α, β) aussendet.

15. Projektor zum Projizieren eines aus Pixeln (P) bestehendes Bildes (2) auf einen Scanbereich (3), umfassend
eine Lichtquelle (6), die dazu ausgebildet ist, einen das genannte Bild (2) tragenden Lichtstrahl (4) auszusenden;
einen Spiegel (7), der dazu ausgebildet ist, um zwei Achsen (9, 10) zu oszillieren, um den Lichtstrahl (4) über den Scanbereich (3) zu reflektieren, um das Bild (2) auf den Scanbereich (3) zu projizieren; und
eine elektrische Schaltung (12) nach Anspruch 14, wobei der Lichtquellentreiber (11) mit der Lichtquelle (6) verbunden ist, um diese anzusteuern, um für jeden bestimmten Reflexionsvektor (r) oder jedes Paar von Auftreffwinkeln (α, β) das gewünschte Pixel (P) des Bildes (2) zu projizieren.

## Revendications

1. Circuit électrique pour la détermination d'un vecteur de réflexion (r) d'un faisceau lumineux (4) incident sur et réfléchi par un miroir oscillant (7), comprenant
une entrée (14) conçue pour obtenir des coordonnées (nₓ, n_{y}, n_{z}, iₓ, i_{y}, i_{z}) d'un vecteur normal de miroir (n) normalisé du miroir oscillant (7) et d'un vecteur d'incidence (i) du faisceau lumineux (4) incident dans un système de coordonnées tridimensionnel (21) commun;
un sous-circuit de projection (22) connecté à l'entrée (14) et conçu pour calculer un produit scalaire (n·i) dudit vecteur normal de miroir (n) et dudit vecteur d'incidence (i) à partir des coordonnées obtenues (nₓ, n_{y}, n_{z}, iₓ, i_{y}, i_{z}) et pour calculer chaque coordonnée (pₓ, p_{y}, p_{z}) d'un vecteur de projection (p) en tant que produit de la coordonnée respective (nₓ, n_{y}, n_{z}) du vecteur normal de miroir (n) et dudit produit scalaire (n·i) fois moins deux ; et
un sous-circuit de sommation (27) connecté à l'entrée (14) et au sous-circuit de projection (22) et conçu pour additionner le vecteur de projection (p) calculé au vecteur d'incidence (i) pour déterminer le vecteur de réflexion (r) du faisceau lumineux (4).

2. Circuit électrique selon la revendication 1, où le sous-circuit de projection (22), pour le calcul du produit scalaire (n·i), comprend
un premier groupe de multiplicateurs (23) ayant un premier multiplicateur (23₁) conçu pour multiplier des premières coordonnées (nₓ, iₓ) du vecteur normal de miroir (n) et du vecteur d'incidence (i) pour déterminer un premier produit (prₓ), un deuxième multiplicateur (23₂) conçu pour multiplier des deuxièmes coordonnées (n_{y}, i_{y}) du vecteur normal de miroir (n) et du vecteur d'incidence (i) pour déterminer un deuxième produit (pr_{y}), et un troisième multiplicateur (23₃) conçu pour multiplier des troisièmes coordonnées (n_{z}, i_{z}) du vecteur normal de miroir (n) et du vecteur d'incidence (i) pour déterminer un troisième produit (pr_{z}), et
un additionneur (24) conçu pour additionner lesdits premier, deuxième et troisième produits (prₓ, pr_{y}, pr_{z}) pour déterminer ledit produit scalaire (n·i).

3. Circuit électrique selon la revendication 1 ou 2, où le sous-circuit de projection (22), pour le calcul du vecteur de projection (p), comprend
un élément multiplicateur (25) conçu pour multiplier ledit produit scalaire (n·i) par moins deux pour déterminer un produit scalaire mis à l'échelle (n·i'), et
un deuxième groupe de multiplicateurs (26) ayant un premier multiplicateur (26₁) conçu pour multiplier la première coordonnée (nₓ) du vecteur normal de miroir (n) par le produit scalaire mis à l'échelle (n·i') pour déterminer une première coordonnée (pₓ) du vecteur de projection (p), un deuxième multiplicateur (26₂) conçu pour multiplier la deuxième coordonnée (n_{y}) du vecteur normal de miroir (n) par le produit scalaire mis à l'échelle (n·i') pour déterminer une deuxième coordonnée (p_{y}) du vecteur de projection (p), et un troisième multiplicateur (26₃) conçu pour multiplier la troisième coordonnée (n_{z}) du vecteur normal de miroir (n) par le produit scalaire mis à l'échelle (n·i') pour déterminer une troisième coordonnée (p_{z}) du vecteur de projection (p).

4. Circuit électrique selon l'une quelconque des revendications 1 à 3, où le sous-circuit de sommation (27), pour la détermination du vecteur de réflexion (r), comprend un premier additionneur (28₁) conçu pour additionner la première coordonnée (pₓ) du vecteur de projection (p) à la première coordonnée (iₓ) du vecteur d'incidence (i) pour déterminer une première coordonnée (rₓ) du vecteur de réflexion (r), un deuxième additionneur (28₂) conçu pour additionner la deuxième coordonnée (p_{y}) du vecteur de projection (p) à la deuxième coordonnée (i_{y}) du vecteur d'incidence pour déterminer une deuxième coordonnée (r_{y}) du vecteur de réflexion (r), et un troisième additionneur (28₃) conçu pour additionner la troisième coordonnée (p_{z}) du vecteur de projection (p) à la troisième coordonnée (i_{z}) du vecteur d'incidence (i) pour déterminer une troisième coordonnée (r_{z}) du vecteur de réflexion (r).

5. Circuit électrique selon l'une quelconque des revendications 1 à 4, où l'entrée (14) est en outre conçue pour obtenir un sinus et un cosinus de chacun d'un premier et/ou d'un deuxième angle d'orientation (γ, δ) indiquant une orientation d'une zone de balayage (3), et où le circuit électrique (12) comprend un sous-circuit de rotation (32) connecté à l'entrée (14) et au sous-circuit de sommation (27) et conçu pour tourner le vecteur de réflexion (4) déterminé autour dudit premier et/ou deuxième angle d'orientation (γ, δ).

6. Circuit électrique selon la revendication 5, où le sous-circuit de rotation (32), pour la rotation du vecteur de réflexion autour dudit premier angle d'orientation (γ), comprend
un premier multiplicateur (35₁) conçu pour multiplier le sinus du premier angle d'orientation (γ) par la troisième coordonnée (r_{z}) du vecteur de réflexion (r) pour déterminer un premier terme de somme (s₁),
un deuxième multiplicateur (35₂) conçu pour multiplier le cosinus du premier angle d'orientation (γ) par la première coordonnée (rₓ) du vecteur de réflexion (r) pour déterminer un deuxième terme de somme (s₂),
un premier additionneur (36₁) conçu pour additionner les premier et deuxième termes de somme (s₁, s₂) pour déterminer une première coordonnée (rₓ') du vecteur de réflexion (r) tourné autour du premier angle d'orientation (γ),
un troisième multiplicateur (35₃) conçu pour multiplier le cosinus du premier angle d'orientation (γ) par la troisième coordonnée (r_{z}) du vecteur de réflexion (r) pour déterminer un troisième terme de somme (s₃),
un quatrième multiplicateur (35₄) conçu pour multiplier le sinus du premier angle d'orientation (γ) par la première coordonnée (rₓ) du vecteur de réflexion (r) pour déterminer un quatrième terme de somme (s₄), et
un deuxième additionneur (36₂) conçu pour additionner le troisième terme de somme (s₃) et un négatif du quatrième terme de somme (s₄) pour déterminer une troisième coordonnée (r_{z}') du vecteur de réflexion (r) tourné autour dudit premier angle d'orientation (γ).

7. Circuit électrique selon la revendication 6, où le sous-circuit de rotation (32), pour la rotation du vecteur de réflexion (r) en outre autour dudit deuxième angle d'orientation (δ), comprend
un cinquième multiplicateur (35₅) conçu pour multiplier le sinus du deuxième angle d'orientation (δ) par la troisième coordonnée (r_{z}') du vecteur de réflexion (r) tourné autour dudit premier angle d'orientation (γ) pour déterminer un cinquième terme de somme (s₅),
un sixième multiplicateur (35₆) conçu pour multiplier le cosinus du deuxième angle d'orientation (δ) par la deuxième coordonnée (r_{y}') du vecteur de réflexion (r) tourné autour dudit premier angle d'orientation (γ) pour déterminer un sixième terme de somme (s₆),
un troisième additionneur (36₃) conçu pour additionner le sixième terme de somme (s₆) et un négatif du cinquième terme de somme (s₅) pour déterminer une deuxième coordonnée (r_{y}") du vecteur de réflexion (r) tourné autour dudit deuxième angle d'orientation (δ),
un septième multiplicateur (35₇) conçu pour multiplier le cosinus du deuxième angle d'orientation (δ) par la troisième coordonnée (r_{z}') du vecteur de réflexion (r) tourné autour dudit premier angle d'orientation (γ) pour déterminer un septième terme de somme (s₇),
un huitième multiplicateur (35₈) conçu pour multiplier le sinus du deuxième angle d'orientation (δ) par la deuxième coordonnée (r_{y}') du vecteur de réflexion (r) tourné autour dudit premier angle d'orientation (γ) pour déterminer un huitième terme de somme (s₈),
un quatrième additionneur (36₄) conçu pour additionner les septième et huitième termes de somme (s₇, s₈) pour déterminer une troisième coordonnée (r_{z}") du vecteur de réflexion (r) tourné autour dudit deuxième angle d'orientation (δ).

8. Circuit électrique selon l'une quelconque des revendications 1 à 7, comprenant en outre un sous-circuit de détermination d'angle (39) conçu pour déterminer, à partir du vecteur de réflexion (r) déterminé, un angle d'incidence vertical et horizontal (α, β) du faisceau lumineux (4) sur la zone de balayage (3), vu depuis la zone de balayage (3).

9. Circuit électrique selon l'une quelconque des revendications 1 à 8, conçu pour déterminer ledit vecteur de réflexion (r) ou lesdits angles d'incidence (α, β) de manière répétée, de préférence en continu, pour des orientations successives du miroir oscillant (7).

10. Circuit électrique selon l'une quelconque des revendications 1 à 9, où l'entrée (14) comprend un sous-circuit de transformation (43) et est conçue pour recevoir un premier angle d'oscillation (ε) dudit miroir (7) autour d'un premier axe (9) et un deuxième angle d'oscillation (ζ) dudit miroir (7) autour d'un deuxième axe (10), où le sous-circuit de transformation (43) est conçu pour obtenir les coordonnées (nₓ, n_{y}, n_{z}) du vecteur normal de miroir (n) par calcul à partir des premier et deuxième angles d'oscillation (ε, ζ).

11. Circuit électrique selon la revendication 10, où le sous-circuit de transformation (43) comprend
une première unité de sinus (44) conçue pour calculer un sinus du premier angle d'oscillation (ε) pour obtenir la première coordonnée (nₓ) du vecteur normal de miroir (n),
une première unité de cosinus (45) conçue pour calculer un cosinus (cosε) du premier angle d'oscillation (ε),
une deuxième unité de sinus (46) conçue pour calculer un sinus (sinζ) du deuxième angle d'oscillation (ζ),
une deuxième unité de cosinus (47) conçue pour calculer un cosinus (cosζ) du deuxième angle d'oscillation (ζ),
un premier multiplicateur (48) connecté à la première unité de cosinus (45) et à la deuxième unité de sinus (47) et conçu pour multiplier le cosinus (cosε) du premier angle d'oscillation (ε) par le sinus (sinζ) du deuxième angle d'oscillation (ζ) et par moins un pour obtenir la deuxième coordonnée (n_{y}) du vecteur normal de miroir (n), et
un deuxième multiplicateur (49) connecté à la première unité de cosinus (45) et à la deuxième unité de cosinus (47) et conçu pour multiplier le cosinus (cosε) du premier angle d'oscillation (ε) par le cosinus (cosζ) du deuxième angle d'oscillation (ζ) pour obtenir la troisième coordonnée (n_{z}) du vecteur normal de miroir (n).

12. Circuit électrique selon la revendication 10 ou 11, comprenant un sous-circuit de transformation (43) et au moins deux groupes (50ᵣ, 50_{g}, 50_{b}) de sous-circuits, chaque groupe (50ᵣ, 50_{g}, 50_{b}) ayant au moins un sous-circuit de projection (22ᵣ, 22_{g}, 22_{b}) et un sous-circuit de sommation (27ᵣ, 27_{g}, 27_{b}),
où chaque groupe (50ᵣ, 50_{g}, 50_{b}) est connecté au sous-circuit de transformation (43) et conçu pour déterminer le vecteur de réflexion (r) d'un faisceau lumineux (4) respectif.

13. Circuit électrique selon l'une quelconque des revendications 1 à 12, comprenant en outre un capteur (42) connecté à l'entrée (14) et conçu pour capter au moins l'un des elements suivants : les coordonnées (iₓ, i_{y}, i_{z}) du vecteur d'incidence (i), les coordonnées (nₓ, n_{y}, n_{z}) du vecteur normal de miroir (n), le premier angle d'oscillation (ε), le deuxième angle d'oscillation (ζ), le premier angle d'orientation (γ) et le deuxième angle d'orientation (δ), et pour le/les transmettre à l'entrée (14).

14. Circuit électrique selon l'une quelconque des revendications 1 à 13, comprenant en outre un pilote de source lumineuse (11) conçu pour piloter une source lumineuse (6) émettant ledit ou lesdits faisceaux lumineux (4) en fonction du vecteur de réflexion (r) déterminé ou des angles d'incidence (α, β) déterminés.

15. Projecteur pour projeter une image (2) composée de pixels (P) sur une zone de balayage (3), comprenant
une source lumineuse (6) conçue pour émettre un faisceau lumineux (4) portant ladite image (2) ;
un miroir (7) conçu pour osciller autour de deux axes (9, 10) afin de réfléchir le faisceau lumineux (4) à travers la zone de balayage (3) afin de projeter l'image (2) sur la zone de balayage (3) ; et
un circuit électrique (12) selon la revendication 14, où le pilote de source lumineuse (11) est connecté à la source lumineuse (6) pour piloter celle-ci afin de projeter, pour chaque vecteur de réflexion (r) déterminé ou paire d'angles d'incidence (α, β) déterminés, le pixel (P) souhaité de l'image (2).
